(19) Europäisches Patentamt
European Patent Office
Office européen des brevets

(11) **EP 3 517 673 B1**

(12) **EUROPEAN PATENT SPECIFICATION**

(45) Date of publication and mention
of the grant of the patent:
**19.05.2021  Bulletin 2021/20**

(51) Int Cl.:
*D04H 1/4234* (2012.01)        *B01D 39/20* (2006.01)
*D21H 13/48* (2006.01)        *D04H 1/54* (2012.01)
*D04H 1/732* (2012.01)        *D04H 1/587* (2012.01)

(21) Application number: **17853173.7**

(22) Date of filing: **22.09.2017**

(86) International application number:
**PCT/JP2017/034341**

(87) International publication number:
**WO 2018/056405 (29.03.2018 Gazette 2018/13)**

(54) **COPPER FIBER NONWOVEN FABRIC**

KUPFERFASERVLIESSTOFF

ÉTOFFE NON TISSÉE EN FIBRES DE CUIVRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.09.2016  JP 2016187232**

(43) Date of publication of application:
**31.07.2019  Bulletin 2019/31**

(73) Proprietor: **Tomoegawa Co., Ltd.
Tokyo 104-8335 (JP)**

(72) Inventors:
• **OKUMURA Katsuya
  Tokyo 160-0011 (JP)**
• **TSUCHIDA Minoru
  Shizuoka-shi
  Shizuoka 421-0192 (JP)**
• **TSUDA Hajime
  Shizuoka-shi
  Shizuoka 421-0192 (JP)**
• **MURAMATSU Daisuke
  Shizuoka-shi
  Shizuoka 421-0192 (JP)**

(74) Representative: **V.O.
P.O. Box 87930
Carnegieplein 5
2508 DH Den Haag (NL)**

(56) References cited:
**EP-A2- 0 933 984       WO-A1-2016/006614
JP-A- S4 814 882        JP-A- H06 313 250
JP-A- H07 138 606       JP-A- S61 223 105
JP-A- S61 225 400       US-A1- 2008 050 591**

**Description**

TECHNICAL FIELD

The present invention relates to a copper fiber nonwoven fabric obtained by bonding between copper fibers.

BACKGROUND ART

Copper fibers have conventionally been processed into the form of sheets and are used in, or are being examined for use in, applications for filters or electromagnetic shielding and the like by taking advantage of their properties such as electrical conductivity, bactericidal activity and air permeability.

An example of such a filter application that has been proposed consists of a cylindrical metal filter, which enables the density and thickness of the filter body to be adjusted corresponding to the size of impurities to be filtered out present in a high-temperature gas, comprising an internal cylindrical wire mesh having an overlaying portion welded in the longitudinal direction, a filter body obtained by winding a felt sheet made of metal fiber around the internal cylindrical wire mesh at a prescribed thickness and impregnating and drying a heat-resistant resin, and an external cylindrical wire mesh having an overlaying portion welded in the longitudinal direction (see, for example, Patent Document 1).

Processing such as needle punching or pressing is presumed to be used to produce the aforementioned filter body, and metal fibers capable of plastic deformation are proposed to be used preferably for the material of the filter body. Copper fibers are also indicated as being able to be used for these metal fibers.

JP S61 225 400 A discloses a conductive sheet used for preventing electrostatic damage and the like, and more particularly a metal fiber sintered sheet in which metal fibers are mixed at a high mixing ratio and a method for producing the same. As similar sheet is disclosed by JP S61 223105 A, where metallic fibers are bounded to each other by surface sintering.

EP 0 933 984 A2 discloses a thin and flexible electromagnetic wave shielding material composed of a porous sheet containing one or plural kinds of metallic fibers, or a sintered porous sheet obtained by sintering the above porous sheet. The sheet has a thickness of 10 to 100 mu m, a porosity of 70 to 95% and Gurley stiffness of 5 to 50 mg. The sheet can be made by, for example, using stainless steel fiber as the metallic fiber in accordance with a wet paper making process.

US 2008/050591 A1 discloses a method for manufacturing a non-sintered metal fiber medium, comprising the steps of: providing metal fibers; making a slurry comprising the metal fibers and a binding agent by mixing these metal fibers and the binding agent, possibly with a solvent such as water; casting a layer of the slurry on a support using an applicator; solidifying this slurry, providing a non-sintered metal fiber medium comprising the metal fibers and the binding agent. The document also discloses a non-sintered metal fiber medium.

JP H06 313250 A discloses a method where thin wires made of copper or a copper alloy containing <=5% of one or more kinds of elements selected from zinc, tin, nickel, iron, manganese and aluminum are plated with gold, silver, tin, nickel, cobalt or their alloy to form short fibers having a diameter of 10-50mum and a length of <=100mm. The short fibers are uniformly scattered on a nonflammable plate and heated under pressure in a non-oxidizing atmosphere at 650-950 deg.C or in a reducing atmosphere at (0.6-1.0)Tmp (Tmp is the melting point of the plating metal) to sinter the crossed points of the short fibers and obtain a copper-based metallic nonwoven fabric.

JP S48 14882 A also discloses a fabric made of metal fibers

WO 2016/006614 A1 discloses a functional nonwoven used in a molded resin body, the functional nonwoven being obtained by causing a slurry obtained by adding 20-70 parts by mass of an organic fiber to 30-80 parts by mass of an electroconductive fiber to be made into a sheet.

JP H07 138606 A discloses a method where a sheet compounded with metallic fibers is formed by sheeting a slurry of metallic fibers (stainless steel, etc., having 1 to 12mm fiber length) and binder (easily soluble polyvinyl alcohol) and >=70wt.% metallic fibers by a wet process sheeting method. This sheet is subjected to thermal decomposition of the binder in the vacuum or atmosphere gas (argon, etc.) to remove the binder and thereafter the inter-fibers are sintered at a temperature not exceeding the melting point of the metallic fibers.

In addition, a filter device has been proposed that employs a sealing structure capable of preventing damage and so forth to a filtration member by installing an elastic member between a pressing member and the filtration member, and nickel, chromium, alloys thereof, stainless steel and titanium alloy are proposed as examples of metals that can be used for the elastic member (see, for example, Patent Document 2).

Prior Art Documents

Patent Documents

Patent Document 1: Japanese Unexamined Patent Application, First Publication No. H9-276636
Patent Document 2 : Japanese Unexamined Patent Application, First Publication No. 2004-305964

## DISCLOSURE OF THE INVENTION

Problems to be Solved by the Invention

When stress is applied to metal, elastic deformation is known to typically occur followed by the occurrence of plastic deformation. "Elastic deformation" refers to deformation in the case of having applied an external force to an object causing deformation followed by a return to the original shape when that external force is removed. On the other hand, "plastic deformation" refers to deformation in which an external force is applied to an object causing deformation followed by that deformation remaining even after the external force is removed.

However, when metal was used as a material and the like by focusing on such metal properties of electrical conductivity, durability and toughness, the metal ended up being governed by the previously described property, namely the initial occurrence of elastic deformation followed by the occurrence of plastic deformation. In addition, the aforementioned elastic deformation accumulates stain in proportion to, for example, compressive stress. Thus, a material has been sought that, despite being a metal, initially exhibits plastic deformation followed by the occurrence of elastic deformation, which differs from the property typically demonstrated by metals, and has the property of undergoing a change in strain in response to, for example, compressive stress within the region exhibiting that elastic deformation. In particular, a sheet-like material has been sought that exhibits the aforementioned properties in the case of considering the degree of freedom of the shape thereof, such as being able to be arranged in confined locations.

However, in Patent Document 1, a filter body is used that is composed of unbound metal fibers. In addition, although the use of metal fibers capable of plastic deformation is described in Patent Document 1, there is no clear description of the intent thereof or a description regarding elastic deformation.

Patent Document 2 proposes that sealability is attempted to be enhanced by utilizing the compressive elastic modulus of a support body 2B and an elastic member, while there is no description relating to plastic deformation. In addition, there is no description relating to a change in strain within a region of elastic deformation. Moreover, although Patent Document 2 does not contain any description or suggestion regarding copper fibers, this is because copper fibers are not preferable for use as metal capable of satisfying the requirements of strength, corrosion resistance, heat resistance and toughness in elastic member applications.

In contrast, the copper fiber nonwoven fabric of the present invention has a bonding portion between copper fibers and, in the relationship between compressive stress and strain, is provided with a first region exhibiting plastic deformation and a second region exhibiting elastic deformation in which compressive stress is higher than in the first region.

Alternatively, the copper wire nonwoven fabric of the present invention has a bonding portion between copper fibers and, in the relationship between compressive stress and strain, has a region exhibiting elastic deformation, wherein the region exhibiting elastic deformation has an elastic deformation region before an inflection portion a, the inflection portion a, and an elastic deformation region after the inflection portion a.

As a result thereof, an object of the present invention is to provide a copper fiber nonwoven fabric that exhibits cushioning while also having high shape followability. Means for Solving the Problems

As a result of conducting extensive studies, the inventors of the present invention found that, by providing a bonding portion between copper fibers, a copper fiber nonwoven fabric has, in the relationship between compressive stress and strain, a first region exhibiting plastic deformation and a second region exhibiting elastic deformation in which compressive stress is higher than in the first region. Alternatively, the inventors of the present invention found that, by providing a bonding portion between copper fibers, a copper fiber nonwoven fabric has, in the relationship between compressive stress and strain, a region exhibiting elastic deformation, wherein the region exhibiting elastic deformation has an elastic deformation region before an inflection portion a, the inflection portion a, and an elastic deformation region after the inflection portion a, thereby leading to invention of the present copper fiber nonwoven fabric.

Namely, the present invention is as described below.

(1) A copper fiber nonwoven fabric having a bonding portion obtained by a sintering between copper fibers and, in the relationship between compressive stress and strain, is provided with a first region exhibiting plastic deformation and, a second region exhibiting elastic deformation in which compressive stress is higher than the first region, wherein the space factor of the copper fiber nonwoven fabric is within the range of 10% to 25%, the average fiber length of the copper fibers is within the range of 3 mm to 20 mm, the average fiber diameter of the copper fibers is within the range of 15 $\mu$m to 70 $\mu$m, and the plastic deformation rate of the copper fiber nonwoven fabric is 30% to 60%, wherein the plastic deformation rate is obtained by the following formula: (T0-T1)/T0 $\times$ 100, wherein T0 represents pre-test thickness of the copper fiber nonwoven fabric, which is measured by contacting a measuring probe with the copper fiber nonwoven fabric, and T1 represents post-test thickness of the copper fiber nonwoven fabric, which is measured 3 hours following completion of consecutively carrying out the compression operation of increasing a load from 0 MPa to 1 MPa at a compression rate of 1 mm/min using a compression probe and the release operation three times.

(2) The copper fiber nonwoven fabric described in (1), having an inflection portion a in the second region exhibiting elastic deformation where strain exhibits inflection in response to compressive stress.

(3) The copper fiber nonwoven fabric described in (1), wherein the region exhibiting elastic deformation has an elastic deformation region before an inflection portion a, the inflection portion a, and an elastic deformation region after the inflection portion a.

Effects of the Invention

The copper fiber nonwoven fabric of the present invention, in the relationship between compressive stress and strain, has a first region exhibiting plastic deformation and a second region exhibiting elastic deformation in which compressive stress is higher than the first region. Alternatively, the copper fiber nonwoven fabric of the present invention has a region exhibiting elastic deformation, wherein the region exhibiting elastic deformation has an elastic deformation region before an inflection portion a, the inflection portion a, and an elastic deformation region after the inflection portion a. As a result, the copper fiber nonwoven fabric is able to demonstrate favorable cushioning while having shape followability.

Namely, in the case the copper fiber nonwoven fabric of the present invention is subjected to compressive stress, the copper fiber nonwoven fabric is able to follow the shape of the compressed object due to the first region exhibiting plastic deformation and the elastic deformation region before the inflection portion a, and demonstrate favorable cushioning due to the second region exhibiting elastic deformation and the elastic deformation region after the inflection portion a.

BRIEF DESCRIPTION OF THE DRAWINGS

FIG. 1 is a photomicrograph showing an SEM cross-section of a copper fiber nonwoven fabric.

FIG. 2 is a photomicrograph showing the state in which copper fibers are bonded.

FIG. 3 is a graph obtained during measurement of the relationship between compressive stress and strain in the copper fiber nonwoven fabric of the present invention (one embodiment).

FIG. 4 is a graph for specifically explaining a region exhibiting elastic deformation according to the present invention (second region exhibiting elastic deformation).

FIG. 5 is a graph obtained during measurement of the relationship between compressive stress and strain in the copper fiber nonwoven fabric of another embodiment of the present invention.

FIG. 6 is a graph obtained during measurement of the relationship between compressive stress and strain in the copper fiber nonwoven fabric of another embodiment of the present invention.

FIG. 7 is a graph obtained during measurement of the relationship between compressive stress and strain in the copper fiber nonwoven fabric of another embodiment of the present invention.

FIG. 8 is a graph obtained during measurement of the relationship between compressive stress and strain in the copper fiber nonwoven fabric of another embodiment of the present invention.

FIG. 9 is a graph obtained during measurement of the relationship between compressive stress and strain in the copper fiber nonwoven fabric of another embodiment of the present invention.

FIG. 10 is a graph obtained during measurement of the relationship between compressive stress and strain of a copper plate.

FIG. 11 is a schematic diagram of a pressing device for confirming cushioning of the copper fiber nonwoven fabric of the present invention.

FIG. 12 is a schematic diagram for explaining the details of a compressed body placed in a pressing device.

FIG. 13 is a photomicrograph indicating the status of a pressure-sensitive sheet after a press test of a copper fiber nonwoven fabric of Example 1.

FIG. 14 is a photomicrograph indicating the status of a pressure-sensitive sheet after a press test of a copper fiber nonwoven fabric of Example 5.

FIG. 15 is a photomicrograph indicating the status of a pressure-sensitive sheet after a press test of copper foil of Comparative Example 1.

BEST MODE FOR CARRYING OUT THE INVENTION

Although the following provides a detailed explanation of the copper fiber nonwoven fabric of the present invention, embodiments of the copper fiber nonwoven fabric of the present invention are not limited thereto.

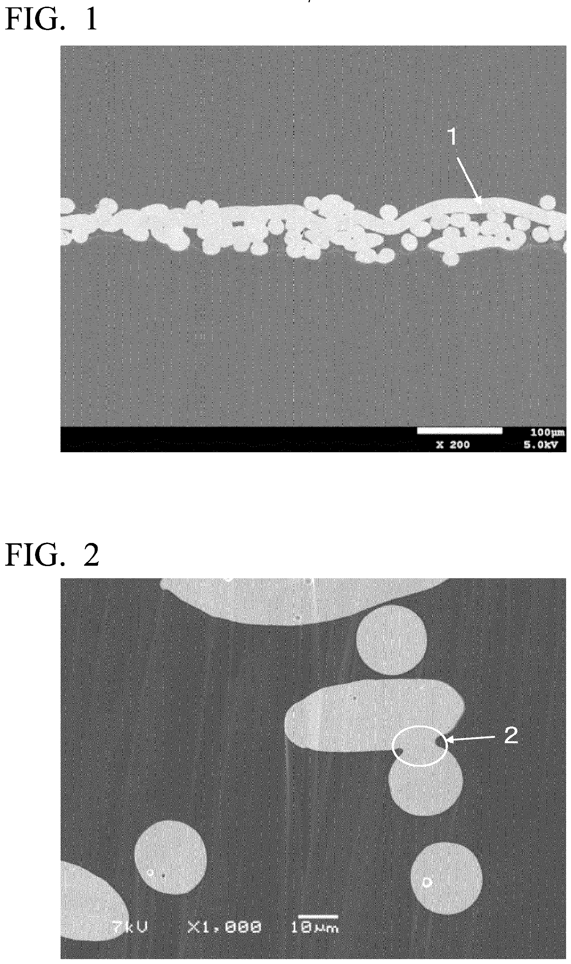

In the present description, a nonwoven fabric refers to a sheet-like material obtained by randomly entangling fibers, and a copper fiber nonwoven fabric refers to a nonwoven fabric at least containing fibers composed of copper. The copper fiber nonwoven fabric of the present invention may be composed only of copper fibers or may have a component other than the aforementioned copper fibers. A bonding portion between the copper fibers refers to a site where the copper fibers are physically fixed in position. The copper fibers may be directly fixed each other, may be fixed each other by a second metal component having a metal component differing from the metal component of the copper fibers, or a part of the copper fibers may be fixed each other by a component other than the metal component. Among these, the copper fibers are preferably fixed directly from the viewpoints of ease of imparting favorable shape followability and cushioning to the copper fiber nonwoven fabric. FIG. 1 is photomicrograph showing an SEM cross-section of a nonwoven fabric composed only of copper fibers that was fabricated using copper fibers. In addition, FIG. 2 is a photomicrograph showing one example of the state of bonding between copper fibers.

Although there are no particular limitations on the aforementioned second metal component, examples thereof include stainless steel, iron, copper, aluminum, bronze, brass, nickel and chromium, and may also be a precious metal such as gold, platinum, silver, palladium, rhodium, iridium, ruthenium or osmium.

Polyolefins such as polyethylene terephthalate (PET) resin, polyvinyl alcohol (PVA), polyethylene or polypropylene, polyvinyl chloride resin, aramid resin, nylon, acrylic resin and organic materials having bonding properties and support properties of these fibrous materials can be used in those portions containing bonding portions as the aforementioned component other than the metal component.

The average fiber diameter of the copper fibers according to the present invention is 15 $\mu$m to 70 $\mu$m and more preferably 15 $\mu$m to 30 $\mu$m. If average fiber diameter is less than 1 $\mu$m, the copper fibers tend to easily form so-called clumps when forming into the nonwoven fabric, while if average fiber diameter exceeds 70 $\mu$m, the rigidity of the copper fibers has the risk of acting to prevent fiber entanglement. In addition, although the cross-sectional shape of the copper fibers may be any of circular, elliptical, roughly quadrangular or irregular, at least copper fibers having a circular cross-section are preferably contained. Copper fibers having a circular cross-section bend more easily (bending portions) in response to stress than copper fibers having a prismatic cross-section, and since a difference in the degree of bending of the copper fibers is not likely to occur with respect to those locations subjected to stress, degree of bending also tends to be uniform. Suitable entanglement of copper fibers having bending portions tends to facilitate enhancement of shape followability and cushioning. Here, the circular cross-section is not required to be perfectly circular, but rather is only required to be a circular cross-section of a degree that facilitates the formation of suitable bending portions when subjected to stress generated in the production of ordinary copper fiber nonwoven fabric. Furthermore, in the present description, "average fiber diameter" refers to the average value (such as the average value of 20 fibers) of area diameter derived by calculating (by using known software, for example) the cross-sectional area of the copper fibers based on a vertical cross-section at an arbitrary location of the copper fiber nonwoven fabric photographed with a microscope, and calculating a diameter of a circle which has the same area as the aforementioned cross-sectional area.

The length of the copper fibers according to the present invention is within the range of 3 mm to 20 mm. If the average fiber length is within the aforementioned ranges, in the case of, for example, producing the copper fiber nonwoven fabric by papermaking, in addition to making it difficult for so-called clumping of the copper fibers to occur and being able to expect the effect of facilitating suitable adjustment of dispersion, it also becomes easy to demonstrate the effect of improving sheet strength attributable to entanglement of the copper fibers. "Average fiber length" in the present description refers to the value obtained by measuring, for example, 20 fibers with a microscope and averaging the measured values. In addition, "papermaking" refers to the production of paper and the like by forming the raw material into a wet, pulpy material and thinly spreading followed by drying.

Although the thickness of the copper fiber nonwoven fabric can be adjusted to an arbitrary thickness, it is preferably, for example, within the range of 50 $\mu$m to 1.5 mm and more preferably 150 $\mu$m to 350 $\mu$m. Furthermore, "sheet thickness" in the present description refers to average value in the case of, for example, measuring thickness at several arbitrary measurement points of the copper fiber nonwoven fabric with a terminal drop type film thickness gauge using air (such as the ID-C112X Digimatic Indicator manufactured by Mitutoyo Corp.).

The space factor of the copper fiber nonwoven fabric of the present invention is within the range of 10% to 25%. In the case the space factor is less than 5%, the amount of fiber becomes insufficient, thereby resulting in the risk in a decrease in shape followability and cushioning, while if the space factor exceeds 60%, the copper fiber nonwoven fabric becomes rigid resulting in the risk of a decrease in shape followability and cushioning. Space factor in the present description refers to the percentage of the portion where fibers are present to the volume of the copper fiber nonwoven fabric, and is calculated according to the equation below from the basis weight and thickness of the copper fiber nonwoven fabric as well as the true density of the copper fibers (case of copper fiber nonwoven fabric composed only of copper fibers).

```
Space factor (%) = (basis weight of copper fiber nonwoven
fabric) / (thickness of copper fiber nonwoven fabric ×
true density of copper fibers) × 100
```

The following provides an explanation of the case of the copper fiber nonwoven fabric of the present invention not being subjected to external force following fabrication.

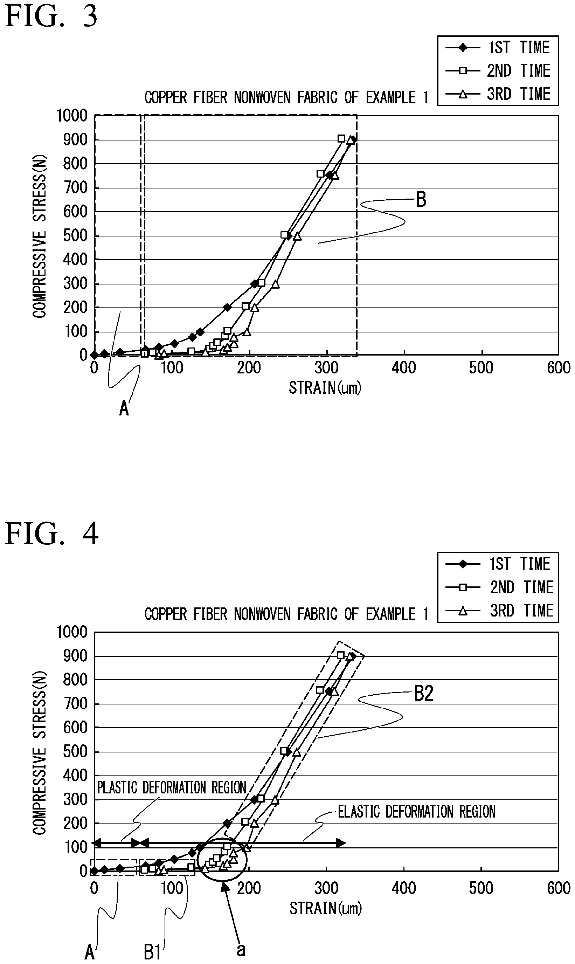

Plastic deformation and elastic deformation of the copper fiber nonwoven fabric of the present invention can be confirmed from a stress-strain curve by carrying out a compression test using a cycle consisting of compression and release. Namely, since the copper fiber nonwoven fabric of the present invention undergoes plastic deformation due to the operation of the first compression and release and the copper fiber nonwoven fabric undergoes a reduction in thickness during the second compression, the starting point of strain (starting position of the compression probe) also lowers beyond that at the time of the absence of compression. (For example, in the graph shown in FIG. 3, since the starting point of the horizontal axis is the point where plastic deformation of the uncompressed copper fiber nonwoven fabric starts, strain starting from the second time is indicated with a positive value.) In the present description, the low strain side is defined as a plastic deformation region (first region exhibiting plastic deformation), and strain beyond the plastic deformation region (high strain side) is defined as an elastic deformation region (second region exhibiting elastic deformation or region indicating elastic deformation) bordering on the strain starting value (compression probe starting position) at the time of existing compression (during compression for the second or third time) in the compression test. Furthermore, the plastic deformation region on the low strain side is not required to be composed only of plastic deformation, but rather elastic deformation may also be present in the plastic deformation region of the low strain side in addition to plastic deformation.

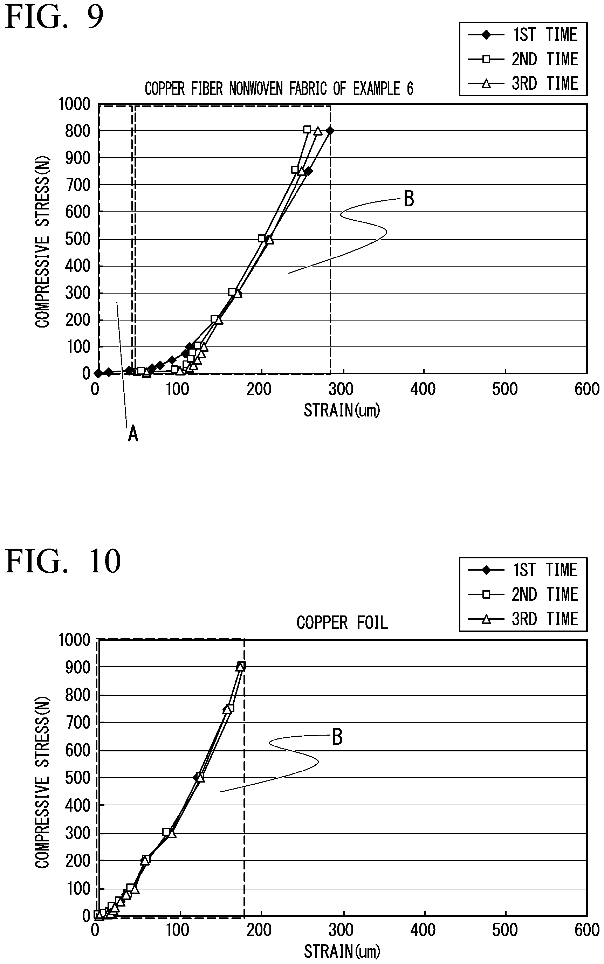

FIG. 3 is a graph obtained during measurement of the relationship between compressive stress and strain in the copper fiber nonwoven fabric of the present invention described in Example 1 of the present description. In the graph, 1st time to 3rd time indicates the number of times compression was applied, the plot of the 1st time indicates measured value during initial compression, the plot of the 2nd time indicates measured values during the second compression, and the plot of the 3rd time indicates measured values during the third compression. According thereto, the copper fiber nonwoven fabric of the present invention can be determined to have a first region A exhibiting plastic deformation, and a second region B exhibiting elastic deformation where compression stress is higher than in the aforementioned first region. Namely, in contrast to the first region A exhibiting plastic deformation being absent in the measured values of the copper plate of FIG. 10, in the copper fiber nonwoven fabric of the present invention shown in FIG. 3, for example, plastic deformation appears as a first region followed by the appearance of elastic deformation as a second region.

Moreover, the second region B exhibiting elastic deformation preferably has an inflection portion a where strain exhibits inflection in response to compressive stress. The "inflection portion a" refers to the portion where the slope of a tangent changes rapidly in a stress-strain curve. FIG. 4 is a graph for specifically explaining the second region exhibiting elastic deformation according to the present invention (region exhibiting elastic deformation). The data values are the same as those of FIG. 3. A region B1 exhibiting elastic deformation before the inflection portion a shown in FIG. 4 (located between region A and inflection portion a) is understood to be a so-called spring elasticity region, while a region B2 exhibiting elastic deformation after the inflection portion a is understood to be a so-called strain elasticity region where strain is accumulated within the metal. Namely, the copper fiber nonwoven fabric of the present invention has region B1 exhibiting elastic deformation before the inflection portion a and a region B2 exhibiting elastic deformation after the inflection portion a in the second region B exhibiting elastic deformation (region exhibiting elastic deformation). As a result, the effect is demonstrated of facilitating enhancement of shape followability and cushioning. Furthermore, the inflection portion a and the region B1 exhibiting elastic deformation before the inflection portion a are not present in the measured values of the copper plate of FIG. 10.

Next, an explanation is provided of the case of the copper fiber nonwoven fabric already having been subjected to external force following fabrication.

In the case of the copper fiber nonwoven fabric of the present invention having already been subjected to external force (such as compressive stress) following the fabrication thereof, the aforementioned first region exhibiting plastic deformation is basically no longer present (at the stage the first cycle of compression and release has ended in terms of the example of FIG. 4). However, the copper fiber nonwoven fabric of the present invention has an elastic deformation region before the inflection portion a, the inflection portion a, and an elastic deformation region after the inflection portion a in the region exhibiting elastic deformation as previously described, even if a region exhibiting plastic deformation is absent. As a result, shape followability and cushioning are demonstrated that are superior to those of typical metals. In addition, a first region exhibiting plastic deformation ought to be present during fabrication of the copper fiber nonwoven fabric of the present invention even in the case of already having been subjected to external force.

The method used to measure the relationship between compressive stress and strain in the present description uses a tension-compression strain measuring tester. First, a square test piece measuring 30 mm on a side is prepared. The thickness of the prepared test piece is measured as the thickness before compression testing using the ID-C112X Digimatic Indicator manufactured by Mitutoyo Corp. This micrometer is able to raise and lower the probe using air. In addition, the speed thereof can also be set arbitrarily. Since the test piece is in a state of being easily crushed by a small amount of stress, when lowering the measuring probe, lower as slowly as possible so that only the dead weight of the probe acts on the test piece. Moreover, the probe is contacted with the test piece only once. The thickness measured at that time is taken to be the "pre-test thickness".

Continuing, the compression test is carried out using the test piece. A 1 kN load cell is used. A compression probe made of stainless steel and having a diameter of 100 mm is used for the jig used in the compression test. The compression rate is set to 1 mm/min and the compression and release operations are consecutively carried out three times on the test piece. As a result, plastic deformation and elastic deformation of the copper fiber nonwoven fabric of the present invention can be confirmed.

In addition, actual strain in response to stress can be calculated from the stress-strain curve obtained according to the compression test, and the amount of plastic deformation can be calculated in accordance with the equation below. Amount of plastic deformation = (strain of first rising portion of curve) - (strain of second rising portion of curve)

At this time, a rising portion refers to strain at 2.5 N.

Thickness of the test piece after testing is measured using the same method as previously described and this is taken to be the "post-test thickness".

In addition, the plastic deformation rate of the copper fiber nonwoven fabric of the present invention is preferably within a desired range. Plastic deformation rate refers to the degree of plastic deformation of the copper fiber nonwoven fabric. Plastic deformation rate (such as the plastic deformation rate when gradually increasing the load from 0 MPa to 1 MPa) is defined as indicated below.

$$\text{Amount of plastic deformation } (\mu m) = T0-T1$$

$$\text{Plastic deformation rate } (\%) = (T0-T1)/T0 \times 100$$

The aforementioned T0 is the thickness of the copper fiber nonwoven fabric prior to the application of a load, while the aforementioned T1 is the thickness of the copper fiber nonwoven fabric after releasing the load after it has been applied.

The copper fiber nonwoven fabric of the present invention is required to have a region where plastic deformation occurs as a first region or have an elastic deformation region before an inflection portion a, the inflection portion a, and an elastic deformation region after the inflection portion a in a region exhibiting elastic deformation. In the case of the first region where plastic deformation occurs, the plastic deformation rate is 30% to 60% and most preferably 47% to 60%. As a result of the plastic deformation rate being 1% or more, shape followability attributable to plastic deformation can be preferably secured, thereby making this preferable. On the other hand, as a result of the plastic deformation rate being 90% or less, plastic deformation does not become excessive, and as a result of leaving an adequate margin for elastic deformation, cushioning attributable to elastic deformation can be secured, thereby making this preferable.

Elongation percentage of the copper fiber nonwoven fabric of the present invention is preferably within the range of 3% to 20%, more preferably 3% to 10%, and even more preferably 5% to 10%. If elongation percentage is less than 3%, there is the risk of a decrease in shape followability in cases, for example, of the surface of the followed object not being flat. If elongation percentage exceeds 20%, there is the risk of a decrease in shape stability of the nonwoven fabric.

Tensile strength of the copper fiber nonwoven fabric of the present invention is preferably 2 N/mm to 20 N/10 mm, more preferably 2 N/10 mm to 10 N/10 mm, and even more preferably 5 N/10 mm to 10 N/10 mm. If tensile strength is less than 2 N/10 mm, there is the risk of breakage of the copper fiber nonwoven fabric depending on the manner in which it is used, while if tensile strength exceeds 20 N/10 mm, there is the risk of a decrease in shape followability.

Clark stiffness (JIS P 8143:2009) of the copper fiber nonwoven fabric of the present invention is preferably 3 to 15, more preferably 3 to 12 and even more preferably 6 to 12. Although Clark stiffness may be 3 or less, there is the risk of increased susceptibility to wrinkling and the like from the viewpoint of handling of the copper fiber nonwoven fabric. In addition, if Clark stiffness is 15 or more, there is the risk of the occurrence of buckling depending on such factors as the shape and diameter of the followed object. The method used to measure Clark stiffness consists of a measurement method in which self-weight deflection is used as an indicator, and a large measured value indicates the strength of the so-called flexural rigidity of a sample. Thus, if the measured value of a sheet-like material is within a fixed range, balance is maintained between ductility and flexural rigidity and the followability of a followed object having a curved portion can be said to be superior.

Although there are no particular limitations on the sheet resistance value of the copper fiber nonwoven fabric of the present invention, it is preferably 0.8 m$\Omega$/$\square$ to 1.5 m$\Omega$/$\square$. Sheet resistance value can be determined according to, for example, the Van der Pauw method.

(Fabrication of Copper Fiber Nonwoven Fabric)

The copper fiber nonwoven fabric of the present invention can be obtained by, for example, a method consisting of compression molding copper fibers or a web consisting mainly of copper fibers, or papermaking using a wet papermaking method using copper fibers or a raw material consisting mainly of copper fibers.

In the case of obtaining the copper fiber nonwoven fabric of the present invention by compression molding, copper fibers or a web consisting mainly of copper fibers obtained by a card method or air-laid method can be compression-molded. At this time, a binder may be impregnated between the fibers in order to impart bonds between the fibers. There are no particular limitations on the binder, and examples of binders that can be used include organic binders such as acrylic adhesives, epoxy adhesives or urethane adhesives, and inorganic binders such as colloidal silica, water glass or sodium silicate. Instead of impregnating with binder, the surface of the fibers may be pre-coated with a thermoadhesive resin followed by applying pressure and heated compression after having laminated the copper fibers or an aggregate consisting mainly of copper fibers.

In addition, the copper fiber nonwoven fabric of the present invention can also be fabricated by a wet papermaking method in which copper fibers and the like are dispersed in water and then thinly spreading out the aqueous dispersion and drying. More specifically, copper fibers or slurry consisting mainly of copper fibers can be prepared followed by the suitable addition thereto of, for example, a filler, dispersant, thickener, antifoaming agent, paper strength enhancer, sizing agent, flocculant, colorant or fixing agent. In addition, organic fibers demonstrating adhesiveness by heating and melting in the manner of polyolefins such as polyethylene terephthalate (PET) resin, polyvinyl alcohol (PVA), polyethylene or polypropylene, polyvinyl chloride resin, aramid resin, nylon or acrylic resin, can be added to the slurry as fibrous materials other than copper fibers. For example, in the case of providing a bonding portion between the copper fibers by sintering, the absence of organic fibers and the like between the copper fibers more reliably facilitates the providing of a binding portion (by making it easier to increase the number of bonding points), and facilitates the obtaining of a first region exhibiting plastic deformation, a second region exhibiting elastic deformation in which compressive stress is higher than in the first region, and an elastic deformation region before an inflection portion a, the inflection portion a and an elastic deformation region after the inflection portion a in a region exhibiting elastic deformation. Consequently, the absence of organic fibers and the like between the copper fibers is preferable from the viewpoints of making it easier to impart shape followability and cushioning to the copper fiber nonwoven fabric of the present invention.

In the case of producing the copper fibers by a papermaking method in the absence of organic fibers and the like as previously described, aggregates such as so-called clumps form easily due to the difference in true density between water and the copper fibers and excessive entanglement of the copper fibers. Consequently, it is preferable to use a suitable thickener and the like. In addition, in the case of slurry present in a stirring mixer, copper fibers of high true density tend to easily precipitate to the bottom of the mixer. Consequently, slurry other than near the bottom of the mixer where the ratio of copper fibers is comparatively stable is preferably used for the slurry. Carrying out this procedure demonstrates the effect of facilitating the imparting of more accurate shape followability and cushioning with little in-plane variation.

Next, wet papermaking is carried out with a papermaking machine using the aforementioned slurry. A cylinder paper machine, Fourdrinier paper machine, tanmo machine, inclined paper machine or combination paper machine combining different types or the same types of these paper machine can be used as papermaking machines. Following papermaking, the wet paper can be dehydrated and dried using an air dryer, cylinder dryer, suction drum dryer or infrared dryer and the like to obtain a sheet.

In addition, when dehydrating, it is preferable to make the flow rate of water generated during dehydration (amount of water generated during dehydration) to be uniform within the plane or in the direction of width and so forth of the papermaking wire. Maintaining a constant flow of dehydration water facilitates the obtaining of a highly homogeneous copper fiber nonwoven fabric since disturbances during dehydration are suppressed and the rate at which the copper fibers precipitate into the papermaking wire is uniform. In order to maintain a constant flow rate during dehydration, measures can be adopted such as removing any structures having the potential to obstruct water flow below the papermaking wire. This demonstrates the effect of making it easy to impart the copper fiber nonwoven fabric with more accurate shape followability and cushioning with little in-plane variation.

When using a wet papermaking method, it is preferable to produce the copper fiber nonwoven fabric by going through a fiber entanglement treatment step in which copper fibers or components consisting mainly of copper fibers, which form a sheet containing water on the wire, are mutually entangled. Here, the fiber entanglement treatment step preferably employs, for example, a fiber entanglement treatment step in which a high-pressure jet stream of water is sprayed onto the surface of the wet material sheet. More specifically, as a result of arranging a plurality of nozzles in the direction perpendicular to the direction of sheet flow and spraying a high-pressure jet stream of water from the plurality of nozzles at the same time, the copper fibers or fibers consisting mainly of copper fibers are entangled over the entire sheet. After having gone through the aforementioned step, the wet material sheet goes through a drying step and is wound up.

The copper fiber nonwoven fabric of the present invention fabricated according to the aforementioned process may also be subjected to, for example, a pressing (pressurizing) step prior to bonding the copper fibers. By carrying out a pressing step prior to bonding, bonding portions can be easily provided (the number of bonding points can be easily increased) more reliably in the subsequent bonding step, and in addition to a first region exhibiting plastic deformation and a second region exhibiting elastic deformation in which compressive stress is higher than the aforementioned first region, an elastic deformation region before an inflection portion a, the inflection portion a and an elastic deformation region after the inflection portion a are easily obtained in the region exhibiting elastic deformation. Consequently, it is preferably to carry out the pressing step prior to bonding from the viewpoints of making it easy to impart shape followability and cushioning to the copper fiber nonwoven fabric of the present invention. In addition, although pressing may be carried out in the presence of heating or in the absence of heating, in the case the copper fiber nonwoven fabric of the present invention contains organic fibers and the like that demonstrating bonding properties as a result of heating and melting, it is effective to heat the fibers to a temperature equal to or higher than the melt starting temperature thereof, while in the case the copper fiber nonwoven fabric is composed by containing copper fibers alone or a second metal component, the fibers are only required to be pressed. Moreover, although the pressure applied during pressing may be suitably set in consideration of the thickness of the copper fiber nonwoven fabric, for example, in case of the copper fiber nonwoven fabric having a thickness of about 170 $\mu$m, by carrying out pressing at a linear pressure of less than 300 kg/cm and preferably less than 250 kg/cm, shape followability and cushioning are easily imparted to the copper fiber nonwoven fabric of the present invention, thereby making this preferable. In addition, this pressing step makes it possible to adjust the space factor of the copper fiber nonwoven fabric.

Examples of methods that can be used to bond copper fibers of a copper fiber nonwoven fabric prepared in this manner include a method consisting of sintering the copper fiber nonwoven fabric, a method consisting of bonding by chemical etching, a laser fusion method, a bonding method using induction heating (IH), a chemical bonding method and a thermal bonding method. Among the aforementioned methods, a method consisting of sintering the copper fiber nonwoven fabric is preferable from the viewpoints of easily obtaining a first region exhibiting plastic deformation and a second region exhibiting elastic deformation in which compressive stress is higher than the aforementioned first region, as well as an elastic deformation region before an inflection portion a, the inflection portion a and an elastic deformation region after the inflection portion a in the region exhibiting elastic deformation, while also facilitating the imparting of shape followability and cushioning to the copper fiber nonwoven fabric of the present invention. FIG. 2 is a photomicrograph observed by SEM of a cross-section of a copper fiber nonwoven fabric in which the copper fibers are bonded by sintering.

A sintering step in which the copper fiber nonwoven fabric is sintered at a temperature equal to or lower than the melting point of the copper fibers in a vacuum or non-oxidizing atmosphere is preferably included for sintering the copper fiber nonwoven fabric. After having gone through the sintering step, the copper fiber nonwoven fabric has lost organic matter, and as a result of bonding at the contact points between copper fibers of a sheet composed only of copper fibers in this manner, more favorable shape followability and cushioning can be imparted to the metal fiber sheet.

Moreover, the homogeneity of the sintered copper fiber nonwoven fabric can be further enhanced by carrying out a pressing (pressurizing) step after sintering. Compressing a copper fiber nonwoven fabric, in which the fibers have been randomly entangled, in the direction of thickness not only causes a shift in the fibers in the direction of thickness, but also in the planar direction. As a result, the effect of facilitating the arrangement of copper fibers even at those locations where there were voids during sintering can be expected to be demonstrated, and such a state can be maintained by a plastic deformation property of copper fibers. As a result, the effect is demonstrated of facilitating the imparting of more accurate shape followability and cushioning to the copper fiber nonwoven fabric with little in-plane variation. Pressure during pressing (pressurizing) is suitably set in consideration of the thickness of the copper fiber nonwoven fabric.

(Applications of Copper Fiber Nonwoven Fabric)

Next, an explanation is provided of applications of the copper fiber nonwoven fabric of the present invention. Although there are no particular limitations on applications of the copper fiber nonwoven fabric of the present invention, it can be used in a wide range of applications such as whole sound transmission materials for providing microphones with wind protection, members providing countermeasures against electromagnetic noise used in electronic circuit boards for the purpose of suppressing electromagnetic waves, copper fiber nonwoven fabric heat transfer materials used as measures against heat generation by semiconductors when soldering to connect semiconductor chips, as well as in applications for providing countermeasures against heat dissipation, heat generation or electromagnetic waves such as in construction materials, vehicles, aircraft and marine members.

Examples

(Example 1)

Copper fibers having a fiber diameter of 18.5 $\mu$m, fiber length of 10 mm and a roughly circular cross-sectional shape were dispersed in water followed by the suitable addition of a thickener to obtain papermaking slurry. This papermaking slurry was loaded onto a papermaking mesh based on a basis weight of 300 g/m$^2$ followed by dehydrating and drying to obtain a copper fiber nonwoven fabric. Subsequently, after pressing the same nonwoven fabric at a linear pressure of 240 kg/cm at normal temperature, the nonwoven fabric was heated for 40 minutes at 1020°C in an atmosphere consisting of 75% hydrogen gas and 25% nitrogen gas to obtain the copper fiber nonwoven fabric of Example 1. The thickness of the resulting copper fiber nonwoven fabric was 166.9 $\mu$m and the space factor was 19.4%.
Graphs obtained during measurement of the relationship between compressive stress and strain in the copper fiber nonwoven fabric of Example 1 are shown in FIGS. 3 and 4.

(Example 2)

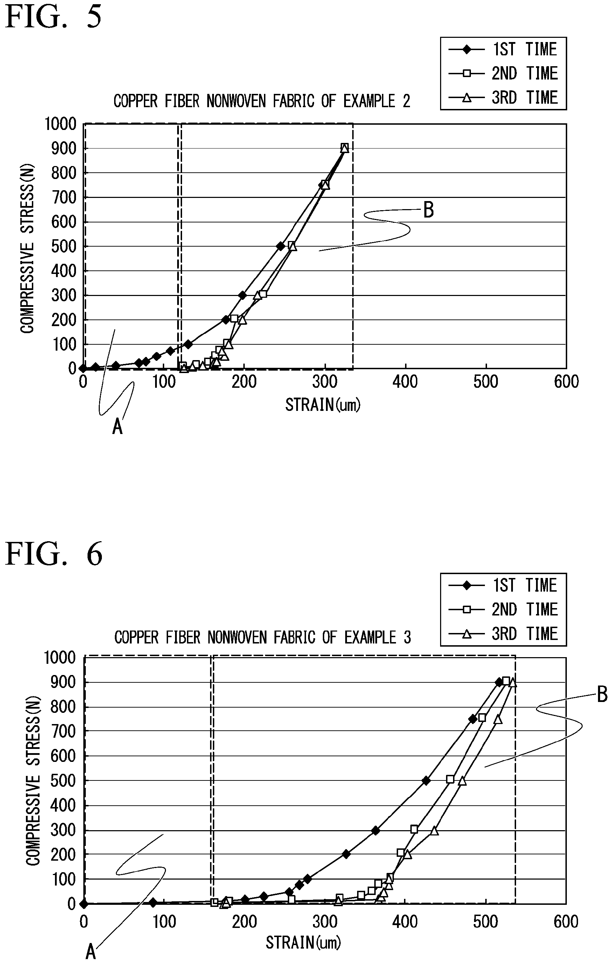

The copper fiber nonwoven fabric of Example 2 was obtained in the same manner as Example 1 with the exception of adjusting the thickness to 213.8 $\mu$m and the space factor to 15.8%.
A graph obtained during measurement of the relationship between compressive stress and strain in the copper fiber nonwoven fabric of Example 2 is shown in FIG. 5.

(Example 3)

The copper fiber nonwoven fabric of Example 3 was obtained in the same manner as Example 1 with the exception of adjusting the thickness to 332.8 $\mu$m and the space factor to 10.3%.
A graph obtained during measurement of the relationship between compressive stress and strain in the copper fiber nonwoven fabric of Example 3 is shown in FIG. 6.

(Example 4)

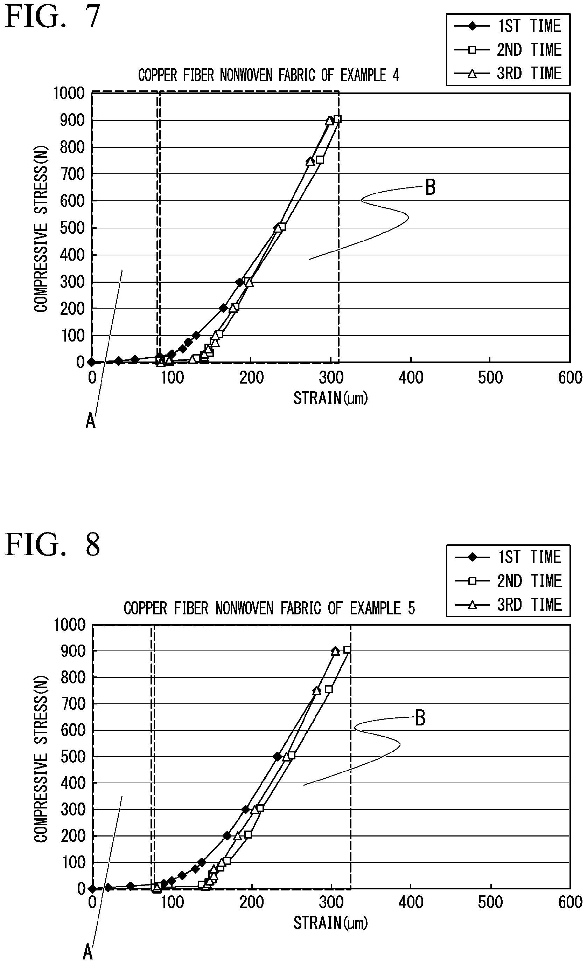

The copper fiber nonwoven fabric of Example 4 was obtained in the same manner as Example 1 with the exception of using copper fibers having a fiber diameter of 30 $\mu$m and fiber length of 10 mm and adjusting the thickness to 149 $\mu$m and the space factor to 24%.
A graph obtained during measurement of the relationship between compressive stress and strain in the copper fiber nonwoven fabric of Example 4 is shown in FIG. 7.

(Example 5)

The copper fiber nonwoven fabric of Example 5 was obtained in the same manner as Example 1 with the exception of using copper fibers having a fiber diameter of 40 $\mu$m and fiber length of 10 mm and adjusting the thickness to 177 $\mu$m and the space factor to 18.8%.
A graph obtained during measurement of the relationship between compressive stress and strain in the copper fiber nonwoven fabric of Example 5 is shown in FIG. 8.

(Example 6)

The copper fiber nonwoven fabric of Example 6 was obtained in the same manner as Example 1 with the exception of using copper fibers having a fiber diameter of 50 μm and fiber length of 10 mm and adjusting the thickness to 179 μm and the space factor to 20.4%.

A graph obtained during measurement of the relationship between compressive stress and strain in the copper fiber nonwoven fabric of Example 6 is shown in FIG. 9.

(Comparative Example 1)

Surface-roughened copper foil having a thickness of 40 μm was prepared. The space factor of this copper foil was 80%.

A graph obtained during measurement of the relationship between compressive stress and strain in the copper foil of Comparative Example 1 is shown in FIG. 10.

(Measurement of Sheet Thickness)

The thicknesses of the copper fiber nonwoven fabrics obtained in the examples and the copper foil obtained in the comparative example were measured with a probe having a diameter of 15 mm using the ID-C112X Digimatic Indicator manufactured by Mitutoyo Corp. The thicknesses of the resulting sheets were measured at 9 points and the average value thereof was taken to be the thickness of the sheet.

(Measurement of Sheet Dimensions)

The dimensions of the short side and long side of the copper fiber nonwoven fabrics obtained in the examples and copper foil obtained in the comparative example were measured using a JIS first class metal ruler.

(Space Factor)

Space factor of the copper fiber nonwoven fabrics obtained in the examples was calculated in the manner indicated below.

```
Space factor (%) = (basis weight of copper fiber nonwoven fabric / thickness of copper fiber nonwoven fabric ×

true density of copper fibers) × 100
```

Space factor of the copper foil obtained in the comparative example was calculated in the manner indicated below.

```
Space factor (%) = bulk density of the sheet / true specific gravity of the material × 100
```

(Confirmation of Plastic/Elastic Deformation)

The relationship between compressive stress and strain of the sheet-like materials (such as copper fiber nonwoven fabrics) prepared in the examples and comparative examples was measured according to the method indicated below.

The aforementioned sheet-like materials were cut into squares measuring 30 mm on a side followed by placing in a tension-compression strain measuring tester (trade name: RTC-1210A, A & D Co., Ltd.). The thickness of the sheet-like material prior to compression testing is the value obtained by measuring using the aforementioned method for measuring sheet thickness. Since the sheet-like material has the potential for being crushed even by a small amount of stress, when lowering the measuring probe, lower as slowly as possible so that only the dead weight of the probe acts on the sheet-like material. Moreover, the probe is contacted with the sheet-like material only once. The thickness measured in this manner is taken to be the "pre-test thickness".

Continuing, a compression test is carried out using the sheet-like materials. A 1 kN load cell is used. A compression probe made of stainless steel and having a diameter of 100 mm is used for the jig used in the compression test. The compression rate is set to 1 mm/min and the compression and release operations are consecutively carried out three times on the sheet-like material. As a result, plastic deformation and elastic deformation of the sheet-like material can be confirmed. Actual strain in response to stress can be calculated from a "stress-strain curve chart" obtained from testing, and the amount of plastic deformation and plastic deformation rate can be calculated in accordance with the equation below.

$$\texttt{Amount of plastic deformation (\mu m) = T0-T1}$$

$$\texttt{Plastic deformation rate (\%) = (T0-T1)/T0} \times \texttt{100}$$

The aforementioned T0 refers to the thickness of the copper fiber nonwoven fabric prior to applying the load, while the aforementioned T1 refers to the thickness of the copper fiber nonwoven fabric after releasing the load after it has been applied.

Thickness of the test piece after testing is measured using the same method as previously described and this is taken to be the "post-test thickness". Thickness after testing was measured 3 hours following completion of testing.

(Measurement of Elongation Percentage and Tensile Strength)

Area of the test piece was adjusted to 15 mm × 180 mm in compliance with JIS P8113 followed by measuring the elongation percentage and tensile strength of the copper fiber nonwoven fabrics of the examples and copper foil of the comparative example at a pulling speed of 30 mm/min.

(Pressing Test)

Shape followability and cushioning of the sheet-like materials (such as copper fiber nonwoven fabrics) prepared in the examples and comparative example were confirmed according to the method indicated below.

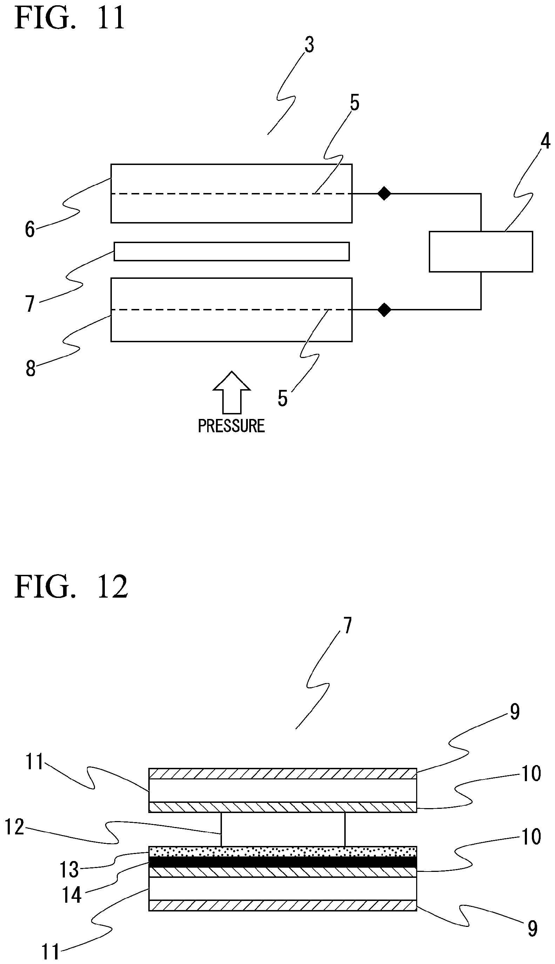

The aforementioned sheet-like materials were cut to 100 mm × 150 mm followed by superimposing an SUS plate 9 (thickness: 1 mm), elastic body 11 (thickness: 1 mm), mirrored SUS plate 10 (thickness: 1 mm), resin sheet 12 (thickness: 0.97 mm), sheet-like material 13 (such as a copper fiber nonwoven fabric), pressure-sensitivity sheet 14 (thickness: 0.18 mm), mirrored SUS plate 10 (thickness: 1 mm), elastic body 11 (thickness: 1 mm) and SUS plate 9 (thickness: 1 mm) in that order starting from the top to form a compressed body 7 as shown in FIG. 12. Next, the compressed body is placed between a stationary plate 6 and a movable plate 8 of the pressing device 3 shown in FIG. 11 provided with a power supply 4 and a heater 5, and after hot-pressing under conditions of 120°C and 0.5 MPa for 2 minutes, cold pressing was carried out under conditions of 0.5 MPa for 3 minutes. Subsequently, the pressure was released and the degree of discoloration of the pressure-sensitive sheet 14 was observed and evaluated.

A pre-scale ultra-low pressure sheet (two-sheet type, Fujifilm Corp.) was used for the pressure-sensitive sheet 14.

Evaluation criteria were as indicated below.

◎ : Hardly any white areas where pressure is not sensed
○: Slight appearance of white areas indicative of low sensitivity but no clear difference in in-plane pressure sensitivity
×: Prominent presence of white areas indicative of low sensitivity and prominent difference in in-plane pressure sensitivity

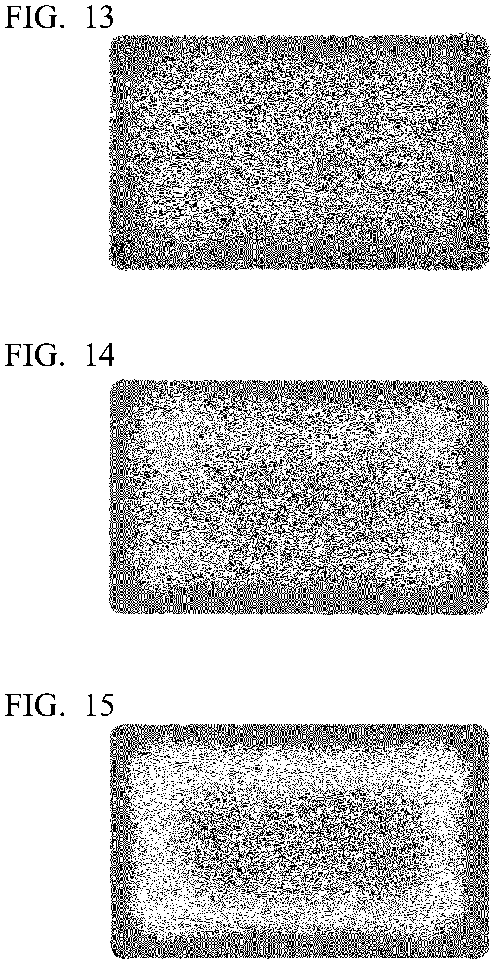

FIG. 13 is a photomicrograph of the pressure-sensitive sheet of Example 1 after the press test, FIG. 14 depicts that of Example 5 and FIG. 15 depicts that of Comparative Example 1.

(Clark Stiffness Test)

Shape followability of the sheet-like materials (such as copper fiber nonwoven fabrics) of the examples and comparative example was confirmed with the Clark Stiffness Tester Method of JIS P 8143:2009.

The presence or absence of plastic deformation and elastic deformation, results of the press test and Clark stiffness and the like of the copper fiber nonwoven fabrics of the examples and copper foil of the comparative example are shown in Table 1.

Physical property values and the like of the copper fiber nonwoven fabrics of the examples and copper foil of the comparative example are shown in Table 2.

[Table 1]

| | Presence or absence of plastic deformation/ elastic deformation | | Region exhibiting elastic deformation | | | Press test results | Clark stiffness |
|---|---|---|---|---|---|---|---|
| | First region exhibiting plastic deformation | Second region exhibiting elastic deformation | Presence or absence of B1 | Presence or absence of inflection portion | Presence or absence of B2 | | |
| Ex.1 | ○ | ○ | ○ | ○ | ○ | ◎ | 6.5 |
| Ex.2 | ○ | ○ | ○ | ○ | ○ | ◎ | 7.3 |
| Ex.3 | ○ | ○ | ○ | ○ | ○ | ◎ | 11.1 |
| Ex.4 | ○ | ○ | ○ | ○ | ○ | ◎ | 6.3 |
| Ex.5 | ○ | ○ | ○ | ○ | ○ | ○ | 5.9 |
| Ex.6 | ○ | ○ | ○ | ○ | ○ | ○ | 3.4 |
| Comp. Ex.1 | × | ○ | × | × | ○ | × | 17.7 |

[Table 2]

| | Avg. fiber diameter (μm) | Avg. fiber length (mm) | Thickness (μm) | Space factor (%) | Amount of plastic deformation (μm) | Plastic deformation rate (%) | Elongation percentage (%) | Tensile strength (N/10 mm) |
|---|---|---|---|---|---|---|---|---|
| Ex.1 | 18.5 | 10 | 166.9 | 19.4 | 87 | 47.9 | 8.2 | 7.7 |
| Ex.2 | 18.5 | 10 | 213.8 | 15.8 | 125 | 53.9 | 9.5 | 7.7 |
| Ex.3 | 18.5 | 10 | 332.8 | 10.3 | 163 | 59.7 | 9.2 | 8 |
| Ex.4 | 30 | 10 | 149 | 24 | 86 | 57.7 | 5.4 | 6.4 |
| Ex.5 | 40 | 10 | 177 | 18.8 | 80 | 46.2 | 4 | 3.5 |
| Ex.6 | 50 | 10 | 179 | 20.4 | 50 | 33.5 | 3.6 | 2.9 |
| Comp. Ex.1 | -- | -- | 40 | 80 | 0 | 0 | 1.5 | 103.7 |

As has been described above, the copper fiber nonwoven fabric of the present invention was determined to have the effect of equalizing differences in in-plane pressure based on the results of press testing as shown in the examples, and have greater ductility than copper foil according to the Clark stiffness tester method. Namely, the copper fiber nonwoven fabric of the present invention, in the relationship between compressive stress and strain, has a first region exhibiting plastic deformation and a second region exhibiting elastic deformation in which compressive stress is higher than in the first region, or has a region exhibiting elastic deformation and the region exhibiting elastic deformation has an elastic deformation region before an inflection portion a, the inflection portion a, and an elastic deformation region after the inflection portion a. As a result, it is able to demonstrate high shape followability and cushioning.

INDUSTRIAL APPLICABILITY

A copper fiber nonwoven fabric can be provided that has cushioning while also have high shape followability.

BRIEF DESCRIPTION OF THE REFERENCE SYMBOLS

1 Copper fiber
2 Bonding portion
A First region exhibiting plastic deformation
B Second region exhibiting elastic deformation (region exhibiting elastic deformation)
B1 Elastic deformation region before inflection portion a
B2 Elastic deformation region after inflection portion a a Inflection portion
3 Pressing device
4 Power supply
5 Heater
6 Stationary plate
7 Compressed body
8 Movable plate
9 SUS plate
10 Mirrored SUS plate
11 Elastic body
12 Resin sheet
13 Sheet-like material
14 Pressure-sensitive sheet

**Claims**

1. A copper fiber nonwoven fabric having a bonding portion obtained by a sintering between copper fibers and, in the relationship between compressive stress and strain, is provided with a first region exhibiting plastic deformation and, a second region exhibiting elastic deformation in which compressive stress is higher than the first region, wherein the space factor of the copper fiber nonwoven fabric, that is measured according to the method in the description, is within the range of 10% to 25%, the average fiber length of the copper fibers is within the range of 3 mm to 20 mm, the average fiber diameter of the copper fibers is within the range of 15 $\mu$m to 70 $\mu$m, and the plastic deformation rate of the copper fiber nonwoven fabric is 30% to 60%, wherein the plastic deformation rate is obtained by the following formula: $(T0-T1)/T0 \times 100$, wherein T0 represents pre-test thickness of the copper fiber nonwoven fabric, which is measured by contacting a measuring probe with the copper fiber nonwoven fabric, and T1 represents post-test thickness of the copper fiber nonwoven fabric, which is measured 3 hours following completion of consecutively carrying out the compression operation of increasing a load from 0 MPa to 1 MPa at a compression rate of 1 mm/min using a compression probe and the release operation three times.

2. The copper fiber nonwoven fabric according to claim 1, having an inflection portion a in the second region exhibiting elastic deformation where strain exhibits inflection in response to compressive stress.

3. The copper fiber nonwoven fabric according to claim 1, wherein the region exhibiting elastic deformation has an elastic deformation region before an inflection portion a, the inflection portion a, and an elastic deformation region after the inflection portion a.

4. The copper fiber nonwoven fabric according to any one of claims 1 to 3, wherein the copper fibers contains at least copper fibers having a circular cross-section.

5. The copper fiber nonwoven fabric according to any one of claims 1 to 4, wherein the thickness of the copper fiber nonwoven fabric, measured according to the method indicated in the description, is within the range of 150 $\mu$m to 350 $\mu$m.

6. The copper fiber nonwoven fabric according to any one of claims 1 to 5, wherein the Clark stiffness according to JIS 8143:2009 of the copper fiber nonwoven fabric is within the range of 3 to 15.

7. The copper fiber nonwoven fabric according to any one of claims 1 to 6, wherein the elongation percentage according to JIS P8113 of the copper fiber nonwoven fabric is within the range of 3% to 20%.

8. The copper fiber nonwoven fabric according to any one of claims 1 to 7, wherein the tensile strength according to JIS P8113 of the copper fiber nonwoven fabric is 2 N/10mm to 10 N/10 mm.

**9.** A method for producing a copper fiber nonwoven fabric according to any one of claims 1 to 8, comprising:

a papermaking step for dispersing copper fibers or a raw material consisting mainly of copper fibers in water with a mixer to form a slurry, and papermaking the slurry other than near the bottom of the mixer using a wet papermaking method,

a pressing step for pressing the copper fiber nonwoven fabric fabricated according to the papermaking process prior to bonding the copper fibers, and

a sintering step for bonding the copper fibers by sintering.

**Patentansprüche**

**1.** Vliesstoff aus Kupferfasern mit einem Bindeabschnitt, der durch eine Sinterung zwischen Kupferfasern erhalten wird, und,

im Verhältnis zwischen Druckspannung und Stauchung,

mit einem ersten Bereich, der eine plastische Verformung aufweist, und einem zweiten Bereich, der eine elastische Verformung aufweist, in dem die Druckspannung höher ist als in dem ersten Bereich, versehen ist, wobei der Raumfaktor des Vliesstoffes aus Kupferfasern, der nach dem in der Beschreibung angegebenen Verfahren gemessen wird, im Bereich von 10 % bis 25 % liegt,

die durchschnittliche Faserlänge der Kupferfasern im Bereich von 3 mm bis 20 mm liegt,

der durchschnittliche Faserdurchmesser der Kupferfasern im Bereich von 15 $\mu$m bis 70 $\mu$m hegt, und

die plastische Verformungsrate des Vliesstoffes aus Kupferfasern 30 % bis 60 % beträgt, wobei die plastische Verformungsrate durch die folgende Formel erhalten wird: (T0-T1)/T0 x 100, wobei T0 die Dicke des Vliesstoffes aus Kupferfasern vor dem Test darstellt, die durch Berühren einer Messsonde mit dem Vliesstoff aus Kupferfasern gemessen wird, und T1 die Dicke des Vliesstoffes aus Kupferfasern nach der Prüfung darstellt, die 3 Stunden nach Beendigung der dreimaligen aufeinanderfolgenden Durchführung des Kompressionsvorgangs der Erhöhung einer Last von 0 MPa auf 1 MPa bei einer Kompressionsrate von 1 mm/min unter Verwendung einer Kompressionssonde und des Freigabevorgangs gemessen wird.

**2.** Vliesstoff aus Kupferfasern nach Anspruch 1, mit einem Beugungsabschnitt a im zweiten Bereich, der eine elastische Verformung aufweist, bei der die Dehnung als Reaktion auf eine Druckspannung eine Beugung aufweist.

**3.** Vliesstoff aus Kupferfasern nach Anspruch 1, wobei der Bereich, der eine elastische Verformung aufweist, einen elastischen Verformungsbereich vor einem Beugungsabschnitt a, den Beugungsabschnitt a und einen elastischen Verformungsbereich nach dem Beugungsabschnitt a aufweist.

**4.** Vliesstoff aus Kupferfasern nach einem der Ansprüche 1 bis 3, wobei die Kupferfasern wenigstens Kupferfasern mit einem kreisförmigen Querschnitt enthalten.

**5.** Vliesstoff aus Kupferfasern nach einem der Ansprüche 1 bis 4, wobei die Dicke des Vliesstoffes aus Kupferfasern, gemessen nach dem in der Beschreibung angegebenen Verfahren, im Bereich von 150 $\mu$m bis 350 $\mu$m liegt.

**6.** Vliesstoff aus Kupferfasern nach einem der Ansprüche 1 bis 5, wobei die Clark-Steifigkeit nach JIS P 8143:2009 des Vliesstoffes aus Kupferfasern im Bereich von 3 bis 15 liegt.

**7.** Vliesstoff aus Kupferfasern nach einem der Ansprüche 1 bis 6, wobei der Dehnungsprozentsatz nach JIS P8113 des Vliesstoffes aus Kupferfasern im Bereich von 3 % bis 20 % liegt.

**8.** Vliesstoff aus Kupferfasern nach einem der Ansprüche 1 bis 7, wobei die Zugfestigkeit nach JIS P8113 des Vliesstoffes aus Kupferfasern 2 N/10mm bis 10 N/10mm beträgt.

**9.** Verfahren zur Herstellung eines Vliesstoffes aus Kupferfasern nach einem der Ansprüche 1 bis 8, umfassend:

einen Papierherstellungsschritt zum Dispergieren von Kupferfasern oder eines Rohmaterials, das hauptsächlich aus Kupferfasern besteht, in Wasser mit einem Mischer, um eine Aufschlämmung zu bilden, und Papierherstellung der Aufschlämmung anders als in der Nähe des Bodens des Mischers unter Verwendung eines Nasspapierherstellungsverfahrens,

einen Pressschritt zum Pressen des nach dem Papierherstellungsverfahren hergestellten Vliesstoffes aus Kupferfasern vor dem Verfestigen der Kupferfasern, und

einen Sinterschritt zum Verfestigen der Kupferfasern durch Sintern.

## Revendications

1. Tissu non tissé en fibres de cuivre ayant une partie de liaison obtenue par frittage entre des fibres de cuivre et, dans la relation entre contrainte de compression et effort, qui est pourvu d'une première région présentant une déformation plastique et,

d'une seconde région présentant une déformation élastique dans laquelle une contrainte de compression est supérieure à la première région, dans lequel

le facteur d'espace du tissu non tissé en fibres de cuivre, mesuré selon le procédé décrit dans la description, est dans la plage allant de 10 % à 25 %,

la longueur de fibre moyenne des fibres de cuivre est dans la plage allant de 3 mm à 20 mm,

le diamètre de fibre moyen des fibres de cuivre est dans la plage allant de 15 $\mu$m à 70 $\mu$m, et

le taux de déformation plastique du tissu non tissé en fibres de cuivre est de 30 % à 60 %, le taux de déformation plastique étant obtenu par la formule suivante : (T0-T1)/T0 x 100, où T0 représente une épaisseur de pré-test du tissu non tissé en fibres de cuivre, qui est mesurée en mettant en contact une sonde de mesure avec le tissu non tissé en fibres de cuivre, et T1 représente une épaisseur post-test du tissu non tissé en fibres de cuivre, qui est mesurée 3 heures après l'achèvement de l'exécution consécutive de l'opération de compression d'augmentation d'une charge de 0 MPa à 1 MPa à un taux de compression de 1 mm/min en utilisant une sonde de compression et l'opération de libération trois fois.

2. Tissu non tissé en fibres de cuivre selon la revendication 1, ayant une partie d'inflexion a dans la seconde région présentant une déformation élastique où l'effort présente une inflexion en réponse à une contrainte de compression.

3. Tissu non tissé en fibres de cuivre selon la revendication 1, dans lequel

la région présentant une déformation élastique a une région de déformation élastique avant une partie d'inflexion a, la partie d'inflexion a et une région de déformation élastique après la partie d'inflexion a.

4. Tissu non tissé en fibres de cuivre selon l'une quelconque des revendications 1 à 3, dans lequel les fibres de cuivre contiennent au moins des fibres de cuivre ayant une section transversale circulaire.

5. Tissu non tissé en fibres de cuivre selon l'une quelconque des revendications 1 à 4, dans lequel l'épaisseur du tissu non tissé en fibres de cuivre, mesurée selon le procédé indiqué dans la description, est dans la plage allant de 150 $\mu$m à 350 $\mu$m.

6. Tissu non tissé en fibres de cuivre selon l'une quelconque des revendications 1 à 5, dans lequel la rigidité Clark selon JIS P 8143 :2009 du tissu non tissé en fibres de cuivre est dans la plage allant de 3 à 15.

7. Tissu non tissé en fibres de cuivre selon l'une quelconque des revendications 1 à 6, dans lequel le pourcentage d'allongement selon JIS P8113 du tissu non tissé en fibres de cuivre est dans la plage allant de 3 % à 20 %.

8. Tissu non tissé en fibres de cuivre selon l'une quelconque des revendications 1 à 7, dans lequel la résistance à la traction selon JIS P8113 du tissu non tissé en fibres de cuivre est de 2 N/10 mm à 10 N/10 mm.

9. Procédé de production d'un tissu non tissé en fibres de cuivre selon l'une quelconque des revendications 1 à 8, comprenant :

une étape de fabrication de papier pour disperser des fibres de cuivre ou une matière première constituée principalement de fibres de cuivre dans de l'eau avec un mélangeur pour former une bouillie, et de fabrication de papier avec la suspension autrement que près du fond du mélangeur en utilisant un procédé de fabrication de papier par voie humide,

une étape de pressage pour presser le tissu non tissé en fibres de cuivre fabriqué selon le procédé de fabrication de papier avant de lier les fibres de cuivre, et

une étape de frittage pour lier les fibres de cuivre par frittage.

FIG. 1

FIG. 2

## FIG. 3

COPPER FIBER NONWOVEN FABRIC OF EXAMPLE 1

Legend: 1ST TIME, 2ND TIME, 3RD TIME

## FIG. 4

COPPER FIBER NONWOVEN FABRIC OF EXAMPLE 1

Legend: 1ST TIME, 2ND TIME, 3RD TIME

## FIG. 5

COPPER FIBER NONWOVEN FABRIC OF EXAMPLE 2

## FIG. 6

COPPER FIBER NONWOVEN FABRIC OF EXAMPLE 3

FIG. 7

COPPER FIBER NONWOVEN FABRIC OF EXAMPLE 4

FIG. 8

COPPER FIBER NONWOVEN FABRIC OF EXAMPLE 5

## FIG. 9

COPPER FIBER NONWOVEN FABRIC OF EXAMPLE 6

Legend: 1ST TIME, 2ND TIME, 3RD TIME

## FIG. 10

COPPER FOIL

Legend: 1ST TIME, 2ND TIME, 3RD TIME

# FIG. 11

PRESSURE

# FIG. 12

FIG. 13

FIG. 14

FIG. 15

**EP 3 517 673 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S61225400 A
- JP S61223105 A
- EP 0933984 A2
- US 2008050591 A1
- JP H06313250 A
- JP S4814882 A
- WO 2016006614 A1
- JP H07138606 A
- JP H9276636 B
- JP 2004305964 A